**Europäisches Patentamt**

**European Patent Office**

**Office européen des brevets**

(11) Veröffentlichungsnummer : **0 025 921**
**B1**

# EUROPÄISCHE PATENTSCHRIFT

(45) Veröffentlichungstag der Patentschrift :
**16.02.83**

(51) Int. Cl.³ : **G 01 N 13/02**

(21) Anmeldenummer : **80105316.6**

(22) Anmeldetag : **05.09.80**

(54) **Vorrichtung zur Messung der Oberflächenspannung.**

(30) Priorität : **17.09.79 DE 2937476**

(43) Veröffentlichungstag der Anmeldung :
**01.04.81 Patentblatt 81/13**

(45) Bekanntmachung des Hinweises auf die Patenterteilung : **16.02.83 Patentblatt 83/07**

(84) Benannte Vertragsstaaten :
**BE DE FR GB**

(56) Entgegenhaltungen :
**DE A 2 104 885**

(73) Patentinhaber : **AGFA-GEVAERT Aktiengesellschaft D-5090 Leverkusen 1 (DE)**

(72) Erfinder : **Lessnig, Werner**
**Rungestrasse 6**
**D-5000 Köln 80 (DE)**
Erfinder : **Metz, Günter** .
**Evergerstrasse 33**
**D-5000 Köln 80 (DE)**
Erfinder : **Spiegel, Willi**
**Grosse-Kirch-Strasse 96**
**D-5090 Leverkusen (DE)**
Erfinder : **Faust, Manfred, Dr.**
**August-Kierspel-Strasse 155**
**D-5060 Bergisch-Gladbach 2 (DE)**
Erfinder : **Junkers, Günter, Dr.**
**Bergische Landstrasse 210**
**D-5090 Leverkusen (DE)**

# 0 025 921

## Vorrichtung zur Messung der Oberflächenspannung

Der Erfindung betrifft eine Vorrichtung zur automatischen Bestimmung der Oberflächenspannung nach dem Stalagmometerprinzip mit einer Pipette, die ein Meßvolumen enthält und an ihrem unteren Ende eine Abtropffläche aufweist, und das Meßvolumen durch eine obere und untere Lichtschranke begrenzt ist und unterhalb der Abtropffläche eine weitere Lichtschranke zum Zählen der Tropfen angeordnet ist.

Es sind eine Vielzahl von Meßverfahren und Vorrichtungen zur Messung der Oberflächenspannung O (N/m) bekannt. Weit verbreitet ist das relativ einfache « Stalagmometer-Meßprinzip » nach J. Traube (Traube, J. In Abderhalden, Handbuch der biochemischen Arbeitsmethoden, Bd. V, 2. Teil, 1912, Seite 1357-1370 ; Houben-Weyl, Methoden der Organischen Chemie, Bd. III, Teil 1, 1958, Seite 468-471).

Das Stalagmometer gemäß J. Traube ähnelt einer Vollpipette, deren Auslauf zu einer Abtropffläche ausgestaltet ist. An dieser polierten Fläche bilden sich beim Auslauf der Meßflüssigkeit aus der gefüllten Pipette nacheinander Tropfen aus, deren Volumen von der Oberflächenspannung der zu untersuchenden Flüssigkeit abhängt. Je größer die Oberflächenspannung, um so größer ist auch das Tropfenvolumen und umgekehrt. Das Volumen der Pipette ist durch Ringmarken begrenzt. Ober- und unterhalb dieser Ringmarken befinden sich Strichteilungen (Feinskalen), mit deren Hilfe Bruchteile von Tropfen abgeschätzt werden können. Da das Meßvolumen der Pipette konstant ist und das Volumen des einzelnen Tropfens von der Oberflächenspannung abhängt, ist die Zahl der Tropfen, die sich aus diesem konstanten Meßvolumen ausbilden, ein direktes Maß für die Oberflächenspannung. Die Bestimmung der Oberflächenspannung beschränkt sich also auf das Auszählen von Tropfen ; die sich aus einem definierten Volumen bilden. Die gemessene Tropfenzahl wird der Tropfenzahl von reinem Wasser mit bekannter Oberflächenspannung gegenübergestellt. Es gilt dann folgende Beziehung :

$$\sigma_X = \frac{\sigma_{H_2O} \cdot T_{H_2O}}{T_x} \cdot \frac{\rho_X}{\rho_{H_2O}}$$

wobei

$\sigma_{H_2O}$ = Oberflächenspannung von Wasser bei der Temperatur t,

$T_{H_2O}$ = Tropfenzahl von Wasser bei der Temperatur t,

$\rho_{H_2O}$ = Dichte von Wasser bei der Temperatur t,

$T_x$ = Tropfenzahl der zu untersuchenden Flüssigkeit bei der Temperatur t,

$\rho_X$ = Dichte der zu untersuchenden Flüssigkeit bei der Temperatur t.

Der Bruch

$$\frac{\sigma_{H_2O} \cdot T_{H_2O}}{\rho_{H_2O}}$$

ist eine durch die Dimensionierung des Stalagmometers festgelegte Gerätekonstante, die aus den bekannten Literaturwerten $\sigma_{H_2O}$ und $\rho_{H_2O}$ (für eine Temperatur t) sowie der gemessenen Tropfenzahl $T_{H_2O}$ (ebenfalls bei der Temperatur t) einmal errechnet wird.

Bei der Messung mit dem Stalagmometer ist folgendes zu beachten : Nach Traube werden nur dann richtige Meßwerte für die Oberflächenspannung erreicht, wenn unabhängig von der Viskosität der Probenflüssigkeit die Geschwindigkeit des Durchlaufes auf max. 20 Tropfen pro Minute, d. h. für einen Tropfen eine Tropfenbildungszeit von minimal 3 Sekunden, festgelegt wird. Dies wird durch die Wahl geeigneter Bremskapillaren erreicht, die entweder direkt unterhalb vom Meßvolumen den Flüssigkeitsdurchlauf infolge ihres Strömungswiderstandes bremsen oder oberhalb vom Meßvolumen durch Drosselung der Luftzufuhr (Belüftung) den Bremseffekt erzielen. In der Praxis wird mit Tropfenbildungszeiten von 3 bis 5 Sekunden gearbeitet.

Da die Oberflächenspannung temperaturabhängig ist, ist eine Thermostatisierung des Stalagmometers unerläßlich.

Trotz des relativ einfachen Meßprinzips hat das bekannte Stalagmometer wesentliche Nachteile :

Hauptnachteil ist die durch visuelle Ablesung von Ringund Strichmarken bedingte geringe Meßgenauigkeit. Da im allgemeinen das Abfallen des ersten und letzten zu zählenden Tropfens nicht genau mit dem Passieren der oberen und unteren Ringmarke zusammenfällt, müssen Tropfenbruchteile mit Hilfe einer ober- und unterhalb der Ringmarken angeordneten Strichskala ermittelt werden. Eine Steigerung der Meßgenauigkeit erfordert ein größeres Meßvolumen, woraus eine höhere Tropfenzahl resultiert, die dann jedoch zu nachteiligen längeren Meßzeiten führt. Bei dem bekannten Stalagmometer ist z. B. das Meßvolumen so dimensioniert, daß man für Wasser bei 20 °C eine Tropfenzahl von etwa 55 Tropfen erhält. Dies führt bei Flüssigkeiten geringerer Oberflächenspannung zu Tropfenzahlen, die durchaus über 100 liegen können. Aus diesen hohen Tropfenzahlen resultieren nachteilig hohe Meßzeiten größer

2

300 Sekunden.

Ein weiterer Nachteil ergibt sich aus der rein manuellen Handhabung sowie Ablesung und Auswertung der Meßwerte. Die Messung ist dadurch sehr personalintensiv und erfordert geschultes, verantwortungsbewußtes Bedienungspersonal, da sonst die subjektiven Fehlermöglichkeiten zu groß sind.

Aus der DE-A-2 104 885 ist eine Vorrichtung zur quasikontinuierlichen oder diskontinuierlichen Oberflächenspannungsmessung nach dem Stalagmometerprinzip bekannt, bei der die aus der Kapillare ausfallenden Tropfen pro Meßvolumen von einer Photozelle gezählt werden. Die Anordnung erlaubt nur dann eine angenähert gute Bestimmung der Oberflächenspannung, wenn die Tropfen eines großen Volumens ausgezählt werden, da Tropfenbruchteile nicht erfaßt werden. Das große Volumen erfordert aber eine lange Meßzeit.

Der Erfindung liegt die Aufgabe zugrunde, die Meßgenauigkeit bei einer automatisierten Vorrichtung zur Messung der Oberflächenspannung nach dem Stalagmometerprinzip zu erhöhen und gleichzeitig die Meßzeit zu minimieren.

Diese Aufgabe wird bei einer Vorrichtung der einleitend genannten Ausbildung erfindungsgemäß dadurch gelöst, daß die drei Lichtschranken mit einer Auswerteschaltung in Verbindung stehen, die zur Ermittlung der zum Meßvolumen gehörenden ganzen Tropfen T0 und der Bruchteile T1, T2 von ganzen Tropfen aus folgenden Baugruppen besteht :

a) Einem elektronischen Zeitzähler, der den 3 Lichtschranken schaltungstechnisch zugeordnet ist ;

b) einer dem Zeitzähler zugeordneten Speichereinheit, in der folgende Zustände abgespeichert werden :

i) der dem letzten Tropfen N vor dem Ansprechen der oberen Lichtschranke entsprechende Zeitzählerstand Z1 ;

ii) der dem Durchgang des Meniskus durch die obere Lichtschranke entsprechende Zeitzählerstand Z2 ;

iii) der an der oberen Lichtschranke nach Ablauf des nächsten Tropfens N + 1 eintretende Zeitzählerstand Z3 ;

iv) die während des Auslaufvorganges nach Ablauf der Tropfen N + 1 aus dem Meßvolumen an der Abtropffläche von der darunter befindlichen Lichtschranke erfasste Zahl T0 von ganzen Tropfen ;

v) der dem letzten Tropfen N + 1 + T0 vor dem Ansprechen der unteren Lichtschranke entsprechende Zeitzählerstand Z4 ;

vi) der dem Durchgang des Meniskus durch die untere Lichtschranke entsprechende Zeitzählerstand Z5 ;

vii) der an der unteren Lichtschranke nach Ablauf des darauf folgenden Tropfens N + 1 + T0 + 1 verbundene Zeitzählerstand Z6 ;

c) und einem Rechner, der zur Erfassung von Bruchteilen eines ganzen Tropfens die Quotienten $T1 = Z3 - Z2/Z3 - Z1$ und $T2 = Z5 - Z4/Z6 - Z4$ aus den abgespeicherten Zeitzählerständen und anschließend die Summe $T_x$ der aus dem Meßvolumen abgelaufenen ganzen Tropfen T0 und den Tropfenbruchteilen T1 und T2 bildet.

Den Tropfen unmittelbar vor und nach Ansprechen der Lichtschranken sowie den Meniskusdurchgängen durch die Lichtschranken werden also die aktuellen Zeitwerte des Zeitzählers als Z1 bis Z6 zugeordnet und abgespeichert. Die im Volumen zwischen den Lichtschranken enthaltenen ganzen Tropfen T0 werden mit der unterhalb der Abtropffläche angeordneten Lichtschranke erfasst und ebenfalls abgespeichert. Würde man mit diesem Wert für die Tropfenzahl die Oberflächenspannung berechnen, so würden sich mehr oder weniger große Meßfehler ergeben, da das Meßvolumen in der Regel kein ganzzahliges vielfaches der Tropfenzahl darstellt. Der Meßfehler entspricht dabei den nicht erfaßten Bruchteilen von Tropfen im Bereich der oberen und unteren Lichtschranke (bis zu − 2 Tropfen). Die Berücksichtigung dieser Tropfenbruchteile gelingt jedoch, wie oben beschrieben, durch die Auswertung der im elektronischen Speicher abgespeicherten Zeitwerte Z1 bis Z6. Durch Addition der Anzahl der ganzen Tropfen T0 und der Tropfenbruchteile T1, T2 ergibt sich dann die exakte Anzahl $T_x$ der im Meßvolumen enthaltenen Tropfen.

Die objektive Erfassung von Tropfenbruchteilen bedeutet eine wesentliche Verbesserung der Meßgenauigkeit. Demgegenüber mußte bei den bekannten Stalagmometern das Meßvolumen und dementsprechend die Tropfenzahl relativ groß gewählt werden, damit der durch die nicht erfassten Tropfenbruchteile bedingte prozentuale Meßfehler klein bleibt. Ein großes Meßvolumen hat aber den Nachteil einer sehr langen Meßzeit, da die Tropfenzahl und damit die Auslaufzeit entsprechend groß ist. Die Erfindung schafft nun zum erstenmal die Voraussetzungen, das Meßvolumen des Stalagmometers und damit die Tropfenzahl ohne Genauigkeitseinbuße zu verkleinern, so daß man zu wesentlich kürzeren Meßzeiten kommt. Die kurzen Meßzeiten ermöglichen eine quasi kontinuierliche, d. h. zyklisch aufeinanderfolgende Messung der Oberflächenspannung, z. B. von Prozeßströmen. Dementsprechend sieht eine Weiterentwicklung der Erfindung vor, daß unterhalb der Abtropffläche des Stalagmometers ein Durchlaufgefäß angeordnet ist, das kontinuierlich von der Probenflüssigkeit durchströmt wird.

Ein weiterer Vorteil der erfindungsgemäßen Vorrichtung wird durch die Anordnung der 3 vorerwähnten Lichtschranken dadurch erreicht, daß deren Signale in Verbindung mit einer nachgeschalteten elektronischen Steuerschaltung zur automatischen Steuerung der Vorrichtung verwendet werden, so daß nach dem manuellen Einsetzen der Probe in die Vorrichtung der gesamte Meßablauf voll automatisiert ist und vorwählbar zyklisch wiederholt werden kann. Durch Eingabe der Dichte in g pro $cm^3$ und der einmal ermittelten Gerätekonstante über eine Ein/Ausgabeeinheit in die elektronische Schaltungseinrichtung, wird als Meßergebnis der Wert der Oberflächenspannung $\sigma$ in N/m direkt ausgegeben.

Die beschriebenen Vorteile sind im Hinblick auf Routinemessungen durch ungeschultes Betriebspersonal von entscheidender Bedeutung.

Im folgenden wird ein Ausführungsbeispiel der Erfindung anhand von Zeichnungen näher beschrieben. Es zeigen :

Figur 1 den prinzipiellen Aufbau des Stalagmometers ;

Figur 2 das Herzstück des Stalagmometers mit den Lichtschrankenebenen und schematisch die dazugehörige elektronische Schaltungseinrichtung zur Erfassung und Verarbeitung der Lichtschrankensignale und ;

Figur 3 den Meniskusstand im Stalagmometer als Funktion der Zeit während des Meßvorganges.

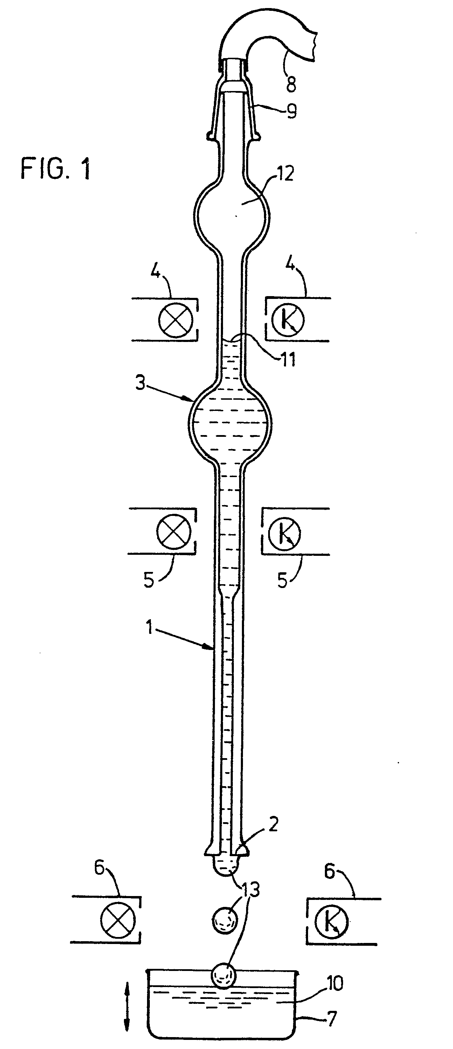

Das Stalagmometer besteht gemäß Fig. 1 aus einer Pipette 1 mit Abtropffläche 2. Ober- und unterhalb einer kugelförmigen Erweiterung sind an zylindrischen Rohren anstelle der sonst üblichen Ringmarken die Lichtschranken 4 und 5 angeordnet. Sie definieren das Meßvolumen 3. Eine weitere Lichtschranke 6 befindet sich unterhalb der Abtropffläche 2. Ein in der Höhe verschiebbarer Probenbehälter 7 ist unterhalb der Abtropffläche 2 angeordnet. Eine Bremskapillare befindet sich in der nicht dargestellten Pneumatikeinheit des automatisierten Stalagmometers und ist über die Schlauchverbindung 8 und den Schliff 9 mit der Pipette 1 verbunden. Der Meßablauf beginnt mit dem Füllen der Pipette 1. Dabei wird zunächst der Probenvorratsbehälter 7 soweit angehoben, daß die Abtropffläche 2 voll in die Probenflüssigkeit 10 eintaucht. Durch Anlegen eines Unterdruckes über die Schlauchverbindung 8 wird die Probenflüssigkeit 10 in die Pipette 1 eingesaugt. Hat der Flüssigkeitsmeniskus 11 die obere Lichtschranke 4 passiert, so wird zeitverzögert der Saugvorgang gestoppt und der Probenbehälter 7 wieder in seine Ausgangsposition abgesenkt. Die Probenflüssigkeit 10 steht jetzt im Volumen 12. Über die Bremskapillare in der Pneumatikeinheit wird nun die Pipette 1 belüftet und es bilden sich Tropfen 13 an der Abtropffläche 2 aus. Diese reißen nacheinander von der Abtropffläche 2 ab, passieren die Lichtschranke 6, bewirken dabei in der nachgeschalteten elektronischen Schaltungseinrichtung einen Ansprechimpuls und fallen in den Probenbehälter 7. Dabei passiert der Flüssigkeitsmeniskus 11 nacheinander die obere Lichtschranke 4 und die untere Lichtschranke 5 und erzeugt dadurch in der Schaltungseinrichtung ebenfalls jeweils einen Ansprechimpuls. Der Meßablauf ist beendet, wenn nach Ansprechen der unteren Lichtschranke 5 der danach fallende Tropfen 13 die Lichtschranke 6 passiert hat. Je nach Programmierung der elektronischen Schaltungseinrichtung können weitere Messungen zyklisch angereiht werden.

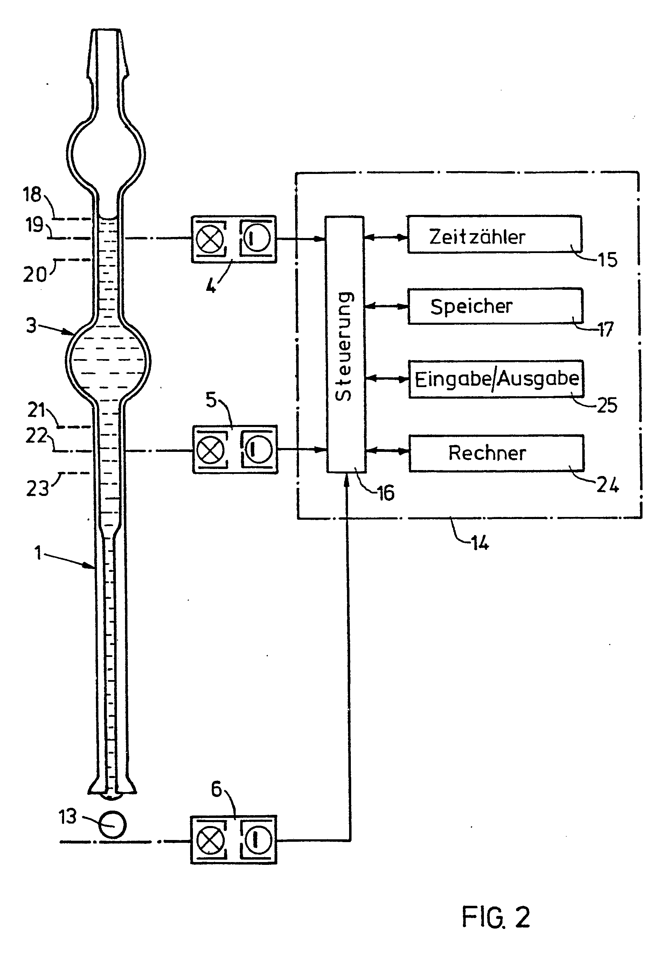

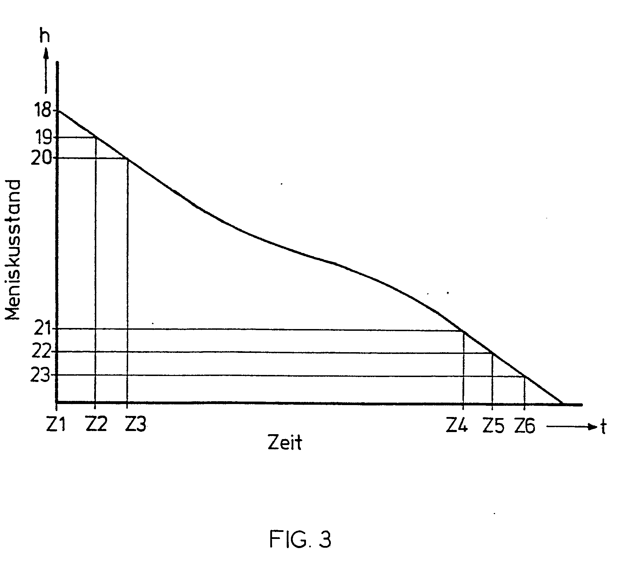

Die Signalerfassung und Verarbeitung wird gemäß Fig. 2 erläutert. Mit dem Beginn des Austropfens nach beendetem Füllvorgang wird in der elektronischen Schaltungseinrichtung 14 (Auswerteschaltung) ein lesbarer Zeitzähler 15 gestartet, der während des gesamten Meßablaufes kontinuierlich durchläuft. Bei jedem Ansprechen der drei Lichtschranken 4 oder 5 oder 6 wird der jeweils aktuelle Zeitzählerstand von der Steuerung 16 abgefragt und im Speicher 17 abgespeichert. Vor dem Ansprechen der oberen Lichtschranke 4 wird bei jedem Tropfen 13, der die Lichtschranke 6 passiert, der vorhergehende Zeitzählerstand überschrieben. Dem letzten Tropfen N vor Ansprechen der oberen Lichtschranke 4 entspricht der Meniskusstand 18 mit dem Zeitzählerstand Z1. Dem darauf folgenden Ansprechen der oberen Lichtschranke 4 entspricht der Meniskustand 19 mit dem Zeitzählerstand Z2. Der nächste Tropfen fällt bei Meniskusstand 20 mit dem Zeitzählerwert Z3. Damit sind mit dem jeweiligen Stand des Flüssigkeitsmeniskus 18, 19 und 20 die Zeitzählerwerte Z1, Z2 und Z3 verknüpft. Dem Meniskusdurchgang durch die obere Lichtschranke 4 sind somit die Tropfenfallereignisse unmittelbar vor und nach dem Meniskusdurchgang zugeordnet. Entsprechend der oberen Lichtschranke 4 sind an der unteren Lichtschranke 5 mit dem jeweiligen Stand des Flüssigkeitmeniskus 21, 22 und 23 die Zeitzählerwerte Z4, Z5 und Z6 verknüpft. Dem Meniskusdurchgang durch die untere Lichtschranke 5 sind somit die Tropfenfallereignisse unmittelbar vor und nach dem Meniskusdurchgang zugeordnet. Dies wird zusätzlich durch das Auslaufdiagramm gemäß Fig. 3 verdeutlicht. Das Diagram zeigt den Meniskusstand h im Stalagmometer als Funktion der Zeit, d. h. während des Meßvorganges. Der Flüssigkeitsspiegel (Meniskusstand) sinkt ausgehend von dem Niveau 18 über das Lichtschrankenniveau 19 und das darunter befindliche Niveau 20 in 1. Näherung linear mit der Zeit ab. Die Niveauänderung von 18 nach 20 entspricht dabei dem Volumen eines ganzen Tropfens. Mann erkennt, daß ohne Berücksichtigung der Tropfenbruchteile in diesem Fall ca. ein halber Tropfen nicht mitgezählt würde. Nach dem Passieren der oberen Lichtschranke 4 erreicht der Meniskus das Kugelvolumen. Aufgrund des größeren Durchmessers nimmt die Sinkgeschwindigkeit zur Kugelmitte hin ab, um danach wieder näherungsweise auf den ursprünglichen Wert anzuwachsen. Schließlich erreicht der Meniskus die untere Lichtschranke 5. Der Meniskusstand 21 ist erreicht, kurz bevor der letzte Tropfen das Meßvolumen 3 verläßt. Aus Fig. 2 und Fig. 3 erkennt man jedoch, daß ähnlich wie bei dem ersten zum Meßvolumen gehörenden Tropfen nicht mehr der ganze Tropfen zum Meßvolumen gehört, sondern nur noch ein Bruchteil (ca. die Hälfte), nämlich der Teil der zwischen den Niveaus 21 und 22 liegt. Dagegen gehört der zwischen den Niveaus 22 und 23 liegende Anteil des Tropfens nicht mehr zum Meßvolumen. Dem Meniskusdurchgang durch die Niveaus 21, 22 und 23 im Bereich der unteren Lichtschranke 5 entsprechen die Zeitmarken Z4, Z5 und Z6.

Mit der Lichtschranke 6 wird die Anzahl der ganzen Tropfen T0 gezählt, die sich aus dem Volumen zwischen den Meniskusständen 20 und 21 bilden. Die Tropfenbruchteile T1 und T2, die sich aus den Volumen zwischen den Meniskusständen 19 und 20 sowie 21 und 22 ergeben, werden aus den im Speicher 17 abgespeicherten Zeitzählerständen Z1 bis Z6 wie folgt über die Steuerung 16 im Rechner 24 ermittelt.

Der Tropfenbruchteil T1 zwischen den Meniskusständen 19 und 20 ist der Quotient aus den Differenzen der Zeitzählerstände Z3 − Z2 und Z3 − Z1, der Tropfenbruchteil T2 zwischen den Meniskusständen 21 und 22 ist der Quotient aus den Differenzen der Zeitzählerstände Z5 − Z4 und Z6 − Z4. Die Ermittlung der zum Meßvolumen 3 gehörenden Tropfenbruchteile T1, T2 erfolgt somit aufgrund des in 1. Näherung linearen Zusammenhanges zwischen Meniskusstand und Zeit im Bereich der oberen (4) und unteren Lichtschranke 5 (s. Fig. 3). Durch Addition der ganzen Tropfen T0 und der Tropfenbruchteile T1 und T2 erhält man die Anzahl der Tropfen Tx, die sich beim Auslaufen der Probenflüssigkeit aus dem Meßvolumen 3 des Stalagmometers, begrenzt durch die Lichtschranken 4 und 5 bilden. Die Genauigkeit der errechneten Tropfenbruchteile hängt somit vom Verhältnis der Tropffrequenz zur Zählfrequenz des Zeitzählers 15 ab. Bei einer mathematischen Rundung der Tropfenbruchteile muß für eine geforderte Genauigkeit von ± 0,1 Tropfen das Frequenzverhältnis ≥ 1 : 10 sein. An die Genauigkeitsforderung für das Meßergebnis, d. h. ganze Tropfen plus Tropfenbruchteile, wird das Meßvolumen 3 angepaßt, um die Meßzeit zu optimieren. So muß z. B. bei einer Genauigkeitsforderung von ± 1 %, entsprechend einer Genauigkeit von ± 0,1 Tropfen, das Meßvolumen 3 so gewählt werden, daß sich für die größte zu messende Oberflächenspannung mindestens 10 Tropfen 13 bilden.

Die Lichtschranken 4, 5, 6 bestehen aus bekannten fotoelektrischen Abtastvorrichtungen. Die Erkennung der Lichtschrankensignale, die Erzeugung und Aufzählung von Zeitimpulsen für die Zeitmessung zur Erfassung der Tropfenbruchteile, die Speicherung der anfallenden Zeitzählerwerte Z1 bis Z6, die mathematische Auswertung der Daten und die Datenausgabe, sowie die Automatisierung des gesamten Meßablaufes erfolgen mit Hilfe bekannter elektronischer Bauelemente. Die wesentlichen Baugruppen sind dabei die Steuerschaltung 16, die den Meßvorgang automatisch einleitet und die dazu erforderlichen Operationen wie z. B. Anheben und Absenken des Probengefäßes, Ansaugen der Flüssigkeit etc., ausführt, der Zeitzähler 15, die Speichereinheit 17, die Datenein- und -ausgabe 25 und der Rechner 24. Die zuletzt genannten vier Baugruppen stehen mit der Steuerschaltung 16 in Wirkverbindung. Neben der Ausgabe der gemessenen Tropfenzahl $T_x$ durch die Ein/Ausgabeeinheit 25 ist die Umrechnung in die physikalische Größe der Oberflächenspannung (N/m) im Rechner 24 durch Eingabe der Dichte von der Probenflüssigkeit und der Gerätekonstante über die Ein- und Ausgabeeinheit 25 möglich. Ebenfalls kann zur Kontrolle der Tropfenbildungszeit die Laufzeit der Flüssigkeit zwischen den Lichtschranken 4 und 5 durch die Ein/Ausgabeeinheit 25 in Sekunden ausgegeben werden.

Für quasi kontinuierliche Messungen wird der Probenbehälter 7 durch ein Gefäß ersetzt, das kontinuierlich von der zu messenden Flüssigkeit durchströmt wird. Die Flüssigkeit wird z. B. kontinuierlich von dem zu untersuchenden Prozeßstrom abgezweigt. Auf diese Weise kann das erfindungsgemäße Stalagmometer als Betriebsmeßgerät eingesetzt werden.

**Ansprüche**

1. Vorrichtung zur automatischen Bestimmung der Oberflächenspannung nach dem Stalagmometerprinzip mit einer Pipette, die ein Meßvolumen enthält und an ihrem unteren Ende eine Abtropffläche aufweist und das Meßvolumen der Pipette durch eine obere und untere Lichtschranke begrenzt ist und unterhalb der Abtropffläche eine weitere Lichtschranke zum Zählen der ganzen Tropfen angeordnet ist, dadurch gekennzeichnet, daß die drei Lichtschranken (4, 5, 6) mit einer Auswerteschaltung (14) in Verbindung stehen, die zur Ermittlung der zum Meßvolumen (3) gehörenden ganzen Tropfen T0 und der Bruchteile T1 und T2 von ganzen Tropfen (13) aus folgenden Baugruppen besteht :

a) einem elektronischen Zeitzähler (15), der den drei Lichtschranken (4, 5, 6) schaltungstechnisch zugeordnet ist,

b) einem Speicher (17), in dem folgende Zustände abgespeichert werden :

i) der dem letzten Tropfen N vor dem Ansprechen der oberen Lichtschranke (4) entsprechende und mit dem Meniskusstand (18) verbundene Zeitzählerstand Z1,

ii) der dem Durchgang des Meniskus (11) durch die obere Lichtschranke (4) entsprechende Zeitzählerstand Z2,

iii) der nach dem Ablauf des nächsten Tropfens N + 1 mit dem Meniskusstand (20) an der oberen Lichtschranke (4) verbundene Zeitzählerstand Z3,

iv) die während des Auslaufvorganges nach Ablauf der Tropfen N + 1 aus dem Meßvolumen (3) an der Abtropffläche (2) von der Lichtschranke (6) erfaßten Zahl T0 von ganzen Tropfen,

v) der dem letzten Tropfen N + 1 + T0 vor dem Ansprechen der unteren Lichtschranke (5) entsprechende und mit dem Meniskus (21) verbundene Zeitzählerstand Z4,

vi) der dem Durchgang des Meniskus (22) durch die untere Lichtschranke (5) entsprechende Zeitzählerstand Z5,

**0 025 921**

vii) der nach Ablauf des darauf folgenden Tropfens N + 1 + T0 + 1 mit dem Meniskusstand (23) an der unteren Lichtschranke (5) verbundene Zeitzählerstand Z6 und

c) einem Rechner (24), der zur Erfassung von Bruchteilen eines ganzen Tropfens die Quotienten T1 = Z3 − Z2 durch Z3 − Z1 und T2 = Z5 − Z4 durch Z6 − Z4 aus den abgespeicherten Zeitzählerständen Z1 bis Z6 und anschließend die Summe $T_x$ der aus dem Meßvolumen (3) abgelaufenen ganzen Tropfen T0 und Tropfenbruchteilen T1 und T2 bildet.

2. Vorrichtung nach Anspruch 1, dadurch gekennzeichnet, daß die drei Lichtschranken (4, 5, 6) mit einer elektronischen Steuerschaltung (16) zur Automatisierung des Meßvorganges verbunden sind.

3. Vorrichtung nach Anspruch 1 bis 2, dadurch gekennzeichnet, daß unterhalb der Abtropffläche (2) ein Durchlaufgefäß angeordnet ist, das kontinuierlich von der Probenflüssigkeit durchströmt wird.

**Claims**

1. An apparatus for automatically determining surface tension by the stalagmometer principle using a pipette containing a test volume and having a drop face at its lower end and the test volume of the pipette is restricted by an upper light barrier and a lower light barrier and an additional light barrier is arranged beneath the drop face for counting the number of whole drops, characterised in that the three light barriers (4, 5, 6) are connected to an evaluation circuit (14) which, for the determination of the whole drops T0 and the fractions T1 and T2 of whole drops (13), pertaining to the test volume, consists of the following structural groups :

a) an electronic time counter (15) which is connected by circuitry to the three light barriers (4, 5, 6),

b) a store (17), in which the following conditions are stored :

i) the time counter state Z1 corresponding to the last drop N before the response of the upper light barrier (4) and linked with the meniscus level (18),

ii) the time counter state Z2 corresponding to the passage of the meniscus (11) through the upper light barrier (4),

iii) the time counter state Z3 linked with the meniscus level (20) at the upper light barrier (4) after passage of the next drop N + 1,

iv) the number T0 of whole drops detected during the outflow occurring after passage of the drop N + 1 from the test volume (3) on the drop face (2) by the light barrier (6),

v) the time counter state Z4 corresponding to the last drop N + 1 + T0 before the response of the lower light barrier (5) and linked with the meniscus level (21),

vi) the time counter state Z5 corresponding to the passage of the meniscus level (22) through the lower light barrier (5),

vii) the time counter state Z6 linked with the meniscus level (23) at the lower light barrier (5) after passage of the subsequent drop N + 1 + T0 + 1 ;

c) a computer (24) which forms the quotients T1 = Z3 − Z2 by Z3 − Z1 and T2 = Z5 − Z4 by Z6 − Z4 from the stored time counter states Z1 to Z6 and then forms the sum $T_x$ of the whole drops T0 and fractions of drops T1 and T2 which have issued from the test volume (3) in order to detect fractions of a whole drop.

2. An apparatus according to Claim 1, characterised in that the three light barriers (4, 5, 6) are connected to an electronic control circuit (16) in order to automate the measuring process.

3. An apparatus according to Claim 1 to 2, characterised in that a flow container through which the sample liquid continuously flows is arranged beneath the drop face (2).

**Revendications**

1. Dispositif pour la détermination automatique de la tension superficielle selon le principe du stalagmomètre avec une pipette contenant un volume de mesure et comportant, à son extrémité inférieure, une surface d'égouttement, le volume de mesure étant délimité par une barrière lumineuse supérieure et une barrière lumineuse inférieure tandis que, en dessous de la surface d'égouttement, on installe une autre barrière lumineuse en vue de compter les gouttes entières, caractérisé en ce que les trois barrières lumineuses (4, 5, 6) sont raccordées à un circuit d'évaluation (14) qui, pour déterminer les gouttes entières T0 appartenant au volume de mesure (3), de même que les fractions T1 et T2 de gouttes entières (13), est constitué des groupes de montage suivants :

a) un compteur horaire électronique (15) qui, selon la technique de montage, est attribué aux trois barrières lumineuses (4, 5, 6),

b) une mémoire (17) dans laquelle sont mémorisés les états suivants :

i) l'état Z1 du compteur horaire qui correspond à la dernière goutte N avant l'excitation de la barrière lumineuse supérieure (4) et qui est associé à la position (18) du ménisque,

ii) l'état Z2 du compteur horaire qui correspond au passage du ménisque (11) par la barrière lumineuse supérieure (4),

iii) l'état Z3 du compteur horaire qui est associé à la position (20) du ménisque dans la barrière

6

lumineuse supérieure (4) après écoulement de la goutte suivante N + 1,

iv) le nombre T0 de gouttes entières déterminé par la barrière lumineuse (6) sur la surface d'égouttement (2) au cours du processus de sortie après écoulement des gouttes N + 1 hors du volume de mesure (3),

v) l'état Z4 du compteur horaire qui est associé à la position (21) du ménisque et qui correspond à la dernière goutte N + 1 + T0 avant l'excitation de la barrière lumineuse inférieure (5),

vi) l'état Z5 du compteur horaire qui correspond au passage du ménisque (22) par la barrière lumineuse inférieure (5),

vii) l'état Z6 du compteur horaire qui est associé à la position (23) du ménisque à la barrière lumineuse inférieure (5) après écoulement de la goutte suivante N + 1 + T0 + 1, et

c) un calculateur (24) qui, pour déterminer des fractions d'une goutte entière, forme les quotients T1 = Z3 − Z2 par Z3 − Z1 et T2 = Z5 − Z4 par Z6 − Z4 à partir des états Z1 à Z6 mémorisés du compteur horaire, puis la somme $T_x$ des gouttes entières T0 qui se sont écoulées du volume de mesure (3), ainsi que des fractions de gouttes T1 et T2.

2. Dispositif suivant la revendication 1, caractérisé en ce que les trois barrières lumineuses (4, 5, 6) sont raccordées à un circuit de commande électronique (16) en vue d'automatiser le processus de mesure.

3. Dispositif suivant les revendications 1 et 2, caractérisé en ce que, en dessous de la surface d'égouttement (2), on installe un récipient de passage dans lequel le liquide échantillon circule continuellement.

FIG. 1

18
19
20

3

21
22
23

1

13

4

5

6

Steuerung

Zeitzähler — 15

Speicher — 17

Eingabe/Ausgabe — 25

Rechner — 24

16

14

FIG. 2

FIG. 3